(19) Europäisches Patentamt
European Patent Office
Office européen des brevets

(11) **EP 3 768 526 B1**

(12) **FASCICULE DE BREVET EUROPEEN**

(45) Date de publication et mention
de la délivrance du brevet:
**22.05.2024 Bulletin 2024/21**

(21) Numéro de dépôt: **19718774.3**

(22) Date de dépôt: **15.03.2019**

(51) Classification Internationale des Brevets (IPC):
***B60C 9/00*** *(2006.01)*      ***B60C 9/04*** *(2006.01)*
***B60C 3/04*** *(2006.01)*

(52) Classification Coopérative des Brevets (CPC):
**B60C 9/005; B60C 3/04; B60C 9/04;**
B60C 2009/0092; B60C 2009/0466

(86) Numéro de dépôt international:
**PCT/FR2019/050584**

(87) Numéro de publication internationale:
**WO 2019/180352 (26.09.2019 Gazette 2019/39)**

(54) **PNEUMATIQUE COMPRENANT UNE UNIQUE NAPPE DE CARCASSE AVEC UNE PROFONDEUR DE DÉFORMATION DANS LE FLANC AMÉLIORÉE APRÈS RODAGE**

REIFEN MIT EINER EINZIGEN KARKASSENLAGE MIT VERBESSERTER VERFORMUNGSTIEFE IN DER SEITENWAND NACH DEM EINFAHREN

TYRE COMPRISING A SINGLE CARCASS PLY WITH AN IMPROVED DEFORMATION DEPTH IN THE SIDEWALL AFTER RUNNING IN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2018 FR 1852368**

(43) Date de publication de la demande:
**27.01.2021 Bulletin 2021/04**

(73) Titulaire: **COMPAGNIE GENERALE DES ETABLISSEMENTS MICHELIN**
**63000 Clermont-Ferrand (FR)**

(72) Inventeurs:
• **DUCHEMIN, Sylvie**
**63040 Clermont-Ferrand Cedex 9 (FR)**
• **DIDANE, Nizar**
**63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 3 287 299**      **WO-A1-2014/057082**
**US-A1- 2015 202 924**      **US-A1- 2016 193 874**

EP 3 768 526 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un pneumatique comprenant une armature de carcasse comprenant une unique nappe de carcasse comprenant un élément de renfort comprenant au moins un brin multifilamentaire de polyamide aromatique ou copolyamide aromatique et au moins un brin multifilamentaire de polyester assemblés ensemble.

Bien que non limitée à ce type d'application, l'invention sera plus particulièrement décrite en référence à un pneumatique destiné à équiper des véhicules du type "SUV" (« Sport Utility Vehicles » en anglais) ou de type petits poids-lourds (« light truck » en anglais) tels que par exemple des camions ou des camionnettes destinés à porter des charges lourdes.

On connait de l'état de la technique un pneumatique destiné à équiper des véhicules du type SUV commercialisé sous la marque MICHELIN et appartenant à la gamme Latitude Tour HP et présentant des caractéristiques dimensionnelles 255/50R19 107 W XL TL. Un tel pneumatique comprend un sommet comprenant une bande de roulement et une armature de sommet, deux flancs, deux bourrelets, chaque flanc reliant chaque bourrelet au sommet. L'armature de sommet s'étend dans le sommet selon une direction circonférentielle du pneumatique. Le pneumatique comprend une armature de carcasse radiale ancrée dans chacun des bourrelets et s'étendant dans les flancs et le sommet. L'armature de sommet est radialement intercalée entre l'armature de carcasse et la bande de roulement. On connait de l'état de la technique des pneumatiques divulgués par WO 2014/057082 A1, EP 3 287 299 A1, US 2016/193874 A1 et US 2015/202924 A1.

Afin de porter une charge relativement élevée liée au poids à vide du véhicule auquel le pneumatique est destiné, le pneumatique, d'une part, présente une hauteur de flanc supérieure ou égale à 110 mm, ici égale à 128 mm, et un indice de charge supérieur ou égal à 94 et ici égal à 107, et d'autre part, est tel que l'armature de carcasse comprend deux nappes de carcasse, chacune comprenant plusieurs éléments de renfort.

Chaque élément de renfort comprend un assemblage équilibré constitué de deux brins multifilamentaires en polyester assemblés ensemble et enroulés en hélice l'un autour de l'autre à une torsion de 290 tours par mètre. Chaque brin multifilamentaire présente un titre égal à 144 tex. Un tel pneumatique de l'état de la technique, en raison de ses deux nappes de carcasse, est relativement lourd et hystérétique, ce qui lui confère une résistance au roulement assez élevée, ce qui est préjudiciable à la consommation de carburant du véhicule sur lequel il est monté.

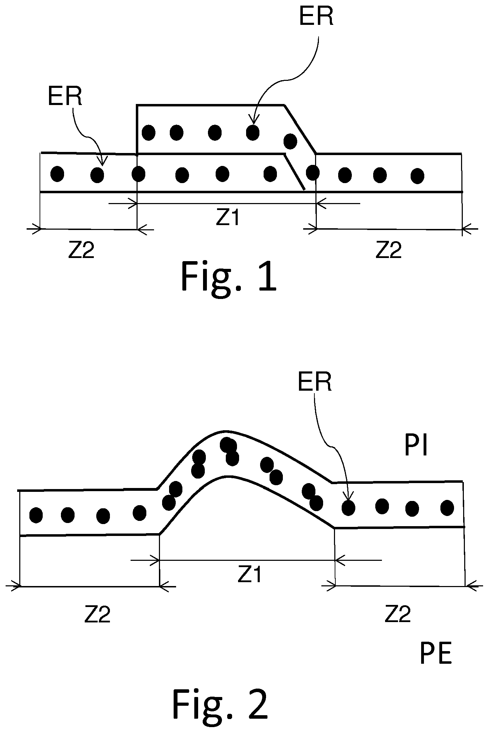

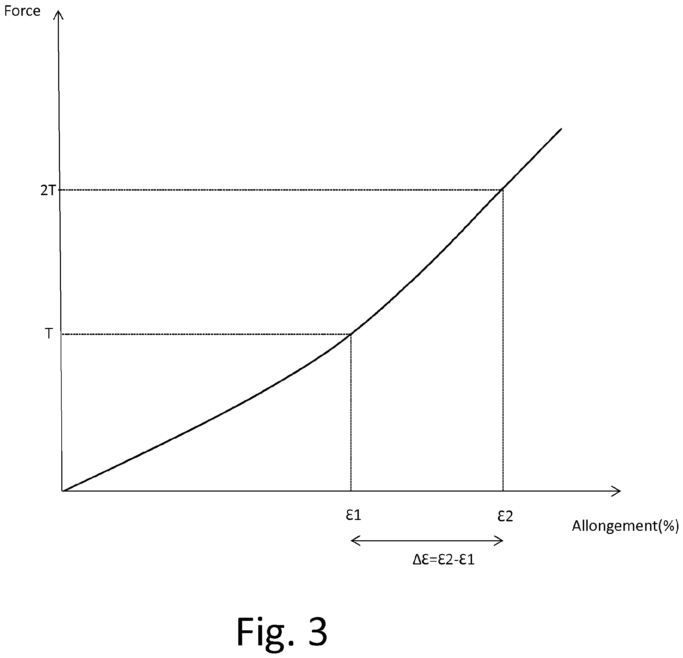

Par ailleurs, d'une manière générale, lors du procédé de fabrication des pneumatiques, on enroule chaque nappe de carcasse sur et autour d'un tambour de confection, chaque nappe de carcasse présentant alors deux extrémités libres. On soude alors les deux extrémités libres de chaque nappe par superposition (et non par aboutage bord à bord des deux extrémités libres) des deux extrémités libres l'une sur l'autre sur une longueur de l'ordre du centimètre afin de former une zone de superposition Z1. Comme illustré sur la figure 1, dans chaque zone de superposition Z1, chaque nappe de carcasse présente une double épaisseur et donc une densité 2de d'éléments de renfort ER deux fois plus élevée par rapport aux zones adjacentes Z2 dans lesquelles chaque nappe de carcasse présente une seule épaisseur et donc une densité de d'éléments de renfort ER. On a représenté sur la figure 3, une courbe force-allongement d'un élément de renfort de l'armature de carcasse du pneumatique de l'état de la technique. Dans le cas d'une sollicitation donnée, chaque élément de renfort de chaque zone adjacente reprend une tension 2T engendrant un allongement $\varepsilon 2$ de chaque élément de renfort compris dans cette zone adjacente Z2, alors que, dans chaque zone de superposition Z1, en raison d'une densité 2d d'éléments de renfort, chaque élément de renfort de chaque zone de superposition Z1 reprend une tension T engendrant un allongement $\varepsilon 1$ de chaque élément de renfort compris dans cette zone superposition Z1, l'allongement $\varepsilon 1$ étant inférieur à $\mathcal{E}2$.

Comme représenté sur la figure 2, cette différence entre $\mathcal{E}1$ et $\mathcal{E}2$, appelée $\Delta\mathcal{E}$, entraine, une fois le pneumatique gonflé à la pression PI et les éléments de renfort sous tension, une différence d'allongement relativement importante entre les éléments de renfort de chacune de ces zones créant, vu de l'extérieur du pneumatique, à la pression extérieure PE, un creux dans chaque flanc du pneumatique, ce creux formant une déformation inesthétique.

Cette déformation est également d'autant plus importante que la pression nominale de gonflage est élevée, une telle pression étant nécessaire pour porter de fortes charges. Cette déformation est d'autant plus importante que la hauteur de flanc est élevée. Les hauteurs de flancs supérieures ou égales à 110 mm sont ainsi particulièrement sensibles à l'apparition de ces déformations. De telles déformations bien qu'uniquement inesthétiques engendrent de nombreux retours de la part des clients car la déformation dépasse le seuil de perception de l'oeil humain. Bien que ce problème ne soit pas présent sur le pneumatique de l'état de la technique présenté ci-dessus du fait qu'il comprenne deux nappes de carcasses, il est important que tout pneumatique fabriqué ne fasse pas l'objet de retours de la part des clients dus à ces déformations même si celles-ci n'ont aucun effet sur la performance et sur la sécurité du pneumatique.

L'invention a pour but de trouver un pneumatique, notamment destiné à équiper des véhicules du type SUV ou de type petits poids-lourds, avec une masse réduite et ne présentant pas de défauts esthétiques inacceptables pour le client.

A cet effet, l'invention a pour objet un pneumatique comprenant un sommet comprenant une bande de roulement et une armature de sommet, deux flancs, deux bourrelets, chaque flanc reliant chaque bourrelet au sommet, l'armature de sommet s'étendant dans le sommet selon une direction circonférentielle du pneumatique, le pneumatique comprenant une armature de carcasse radiale ancrée dans chacun des bourrelets et s'étendant dans les flancs, l'armature de sommet étant radialement intercalée entre l'armature de carcasse et la bande de roulement, le pneumatique présentant une hauteur de flanc supérieure ou égale à 110 mm et un indice de charge supérieur ou égal à 100 dans lequel l'armature de carcasse radiale comprend une unique nappe de carcasse comprenant au moins un élément de renfort comprenant un assemblage constitué de plusieurs brins multifilamentaires comprenant:

- au moins un brin multifilamentaire de polyamide aromatique ou copolyamide aromatique, et
- au moins un brin multifilamentaire de polyester.

D'une part, l'armature de carcasse du pneumatique selon l'invention comprend une seule nappe de carcasse. Ainsi, l'armature de carcasse est, à l'exception de la nappe de carcasse, dépourvue de toute nappe renforcée par des éléments de renfort filaires. Les éléments de renfort filaires de telles nappes renforcées exclues de l'armature de carcasse du pneumatique comprennent les éléments de renfort filaires métalliques et les éléments de renfort filaires textiles. Selon l'invention, l'armature de carcasse est constituée par une nappe de carcasse. En d'autres termes, l'armature de carcasse est constituée d'une unique nappe de carcasse. L'utilisation d'un élément de renfort hybride comprenant un assemblage de monofilaments en polyamide aromatique ou copolyamide aromatique et de monofilaments en polyester permet d'obtenir une nappe de carcasse présentant des propriétés de résistance mécanique, notamment de force à rupture et d'endurance suffisamment élevées pour permettre au concepteur du pneumatique de limiter le nombre de nappes de carcasse dans l'armature de carcasse à une seule (et pas plusieurs) nappe de carcasse. Ainsi, l'utilisation d'éléments de renfort hybride tel que définis ci-dessus permet d'obtenir une nappe de carcasse présentant une force à rupture de nappe suffisante pour porter des charges élevées, que ce soit en raison du poids à vide élevé du véhicule, ou que ce soit en raison du poids total en charge élevé du véhicule. Aussi, en réduisant le nombre de nappes de carcasse, on réduit le coût, la masse mais également l'hystérèse et donc la résistance au roulement du pneumatique.

Un effet de la réduction du nombre de nappes de carcasse est de rendre le pneumatique selon l'invention plus sensible à la présence de déformations dans le flanc à l'issue de son procédé de fabrication. Ainsi, les inventeurs ont remarqué que la profondeur des déformations dans le flanc observées sur le pneumatique selon l'invention, à l'issue de son procédé de fabrication, lorsqu'elle ne dépasse pas le seuil de perception de l'oeil humain, environ égal à 600 $\mu$m, est relativement élevée. Néanmoins, de façon complètement inattendue, la profondeur des déformations diminue après un rodage relativement court du pneumatique selon l'invention et est en dessous du seuil de perception de l'oeil humain à l'issue de ce rodage, ce qui limite, voire supprime les retours de la part des clients. Les inventeurs émettent l'hypothèse que suite au rodage, le module de la courbe force-allongement de chaque élément de renfort augmente de façon à ce que la différence entre $\mathcal{E}_2$ et $\mathcal{E}_1$ diminue et donc de façon à ce que la profondeur de la déformation diminue.

L'invention consiste donc bien en la combinaison d'une seule nappe de carcasse et d'un élément de renfort hybride permettant d'alléger le pneumatique tout en rendant les déformations de flancs invisibles pour le client après une période de rodage.

Enfin, la présence d'une seule nappe de carcasse permet d'obtenir un pneumatique dont l'armature de carcasse est plus souple qu'un pneumatique dont l'armature de carcasse comprend plusieurs nappes de carcasse. Ainsi, on limite la raideur verticale du pneumatique et donc le confort du véhicule sur lequel est monté le pneumatique.

Par filament en polyamide aromatique ou copolyamide aromatique, on rappelle de manière bien connue qu'il s'agit d'un filament de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPT'A), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les méta-aramides (ou poly(métaphénylène isophtalamide ou PA MPD-I notamment connu sous la dénomination commerciale Nomex de la société Du Pont de Nemours) ou les para-aramides (ou poly(paraphénylène téréphtalamide ou PA PPD-T notamment connu sous la dénomination commerciale Kevlar de la société Du Pont de Nemours ou Twaron de la société Teijin).

Par filament en polyester, on rappelle qu'il s'agit d'un filament de macromolécules linéaires formées de groupes liés entre eux par des liaisons esters. Les polyesters sont fabriqués par polycondensation par estérification entre un diacide carboxylique ou de l'un de ses dérivés un diol. Par exemple le polyéthylène téréphtalate peut être fabriqué par polycondensation de l'acide téréphtalique et de l'éthylène glycol. Parmi les polyesters connus, on pourra citer le polyéthylène téréphtalate (PET), le polyéthylène naphthalate (PEN), le polybutylène téréphthalate (PBT), le polybutylène naphthalate (PBN), le polypropylène téréphthalate (PPT') ou le polypropylène naphthalate (PPN).

Par hauteur de flanc, on rappelle qu'il s'agit de la hauteur de section qui est la moitié de la différence entre le diamètre extérieur du pneumatique et le diamètre nominal de la jante tel que défini dans le document « Engineering Design Information », 2017, de l'ETRTO (European Tyre and Rim Technical Organisation), General Information, page GI.5. Une autre façon de déterminer la hauteur de flanc est de multiplier le rapport nominal d'aspect par la grosseur de boudin nominale et en divisant par 100 tel que défini dans le document « Engineering Design Information », 2017, de l'ETRTO (European Tyre and Rim Technical Organisation), General Information, page GI.7.

Par indice de charge, on rappelle qu'il s'agit d'un code numérique associé à la charge maximum qu'un pneumatique peut porter à la vitesse indiquée par son code de vitesse dans les conditions d'utilisation spécifiées par le manufacturier du pneumatique tel que défini dans le document « Standards Manual », 2017, de l'ETRTO (European Tyre and Rim Technical Organisation), General Information, page G.7.

Par armature de carcasse radiale, on entend que chaque élément de renfort de carcasse fait un angle allant de 80° à 90° avec la direction circonférentielle du pneumatique dans le plan circonférentiel équatorial du pneumatique. En d'autres termes, chaque élément de renfort de carcasse fait un angle allant de 80° à 90° avec la direction circonférentielle du pneumatique dans chaque flanc, autrement dit, l'armature de carcasse est radiale dans chaque flanc.

Dans un mode de réalisation, l'armature de carcasse s'étend également dans le sommet.

Chaque élément de renfort fait un angle allant de 80° à 90° avec la direction circonférentielle du pneumatique dans le plan médian du pneumatique. En d'autres termes, chaque élément de renfort de carcasse fait un angle allant de 80° à 90° avec la direction circonférentielle du pneumatique dans le sommet, autrement dit, l'armature de carcasse est radiale dans le sommet.

## Modes de réalisation préférés de l'invention

Avantageusement, le pneumatique présente une hauteur de flanc supérieure ou égale à 120 mm, de préférence supérieure ou égale à 130 mm et encore plus préférentiellement supérieure ou égale à 140 mm.

On constate que plus la hauteur de flanc est importante, plus le pneumatique est susceptible de présenter, à l'issue de son procédé de fabrication, des déformations de flanc profondes. Néanmoins, on a remarqué de manière surprenante que plus la hauteur de flanc est importante, plus le module après rodage des éléments de renfort d'une nappe de carcasse est rehaussé de façon à atteindre une valeur équivalente au module après rodage d'un élément de renfort d'une nappe de carcasse d'un pneumatique présentant une hauteur de flanc plus réduite, et donc moins sensible au problème de déformation de flanc.

Avantageusement, la hauteur de flanc est inférieure ou égale à 220 mm, de préférence inférieure ou égale à 210 mm et encore plus préférentiellement inférieure ou égale à 200 mm.

De telles hauteurs de flanc sont particulièrement adaptées à des pneumatiques destinés à équiper des véhicules du type "SUV" (« Sport Utility Vehicles » en anglais) ou de type petits poids-lourds (« light truck » en anglais) tels que par exemple des camions ou des camionnettes destinés à porter des charges lourdes.

Selon l'invention, l'indice de charge du pneumatique est supérieur ou égal à 100.

Grâce à l'utilisation d'un élément de renfort hybride comprenant un brin multifilamentaire de polyamide aromatique ou copolyamide aromatique, présentant une force à rupture particulièrement élevée, il est alors possible de porter une charge relativement élevée tout en ayant qu'une seule nappe de carcasse, cette nappe de carcasse présentant une densité raisonnable d'éléments de renfort et des ponts de composition d'élastomère reliant les éléments de renfort adjacents bien formés.

Avantageusement, l'indice de charge est inférieur ou égal à 130, de préférence inférieur ou égal à 125 et plus préférentiellement inférieur ou égal à 121.

Au-delà d'un certain indice de charge, il devient difficile d'obtenir des pneumatiques ayant une seule nappe de carcasse dans laquelle la densité d'éléments de renfort demeure en dessous d'un seuil permettant de former correctement les ponts de composition d'élastomère.

Avantageusement, la pression nominale de gonflage du pneumatique est supérieure ou égale à 200 kPa, de préférence supérieure ou égale à 220 kPa et plus préférentiellement supérieure ou égale à 250 kPa.

La pression nominale de gonflage est la pression recommandée par l'ETRTO considérée comme minimale pour une utilisation générale telle que définie dans le document « Engineering Design Information », 2017, de l'ETRTO (European Tyre and Rim Technical Organisation), page C.3.

Plus la pression nominale de gonflage est élevée, plus le pneumatique est sensible à l'apparition de déformations de flanc de grandes profondeurs. Grâce à l'invention, des pneumatiques présentant de telles pressions nominales de gonflage sont dépourvus de déformations de flanc présentant une profondeur supérieure au seuil de perception de l'oeil humain, notamment à l'issue du rodage.

Avantageusement, la pression nominale de gonflage est inférieure ou égale à 600 kPa, de préférence inférieure ou égale à 585 kPa et plus préférentiellement inférieure ou égale à 575 kPa.

Avantageusement, le pneumatique présente un rapport d'aspect allant de 35 à 95 et de préférence de 40 à 80.

Le rapport d'aspect ou rapport d'aspect nominal est le rapport exprimé en pourcentage de la hauteur de la section du pneumatique sur la largeur nominale de la section du pneumatique tel que défini dans le document « Engineering Design Information », 2017, de l'ETRTO (European Tyre and Rim Technical Organisation), paragraphe D, page GI.5.

Avantageusement, le pneumatique présente un diamètre nominal de jante allant de 13 à 22 pouces et de préférence de 14 à 21 pouces.

Le diamètre nominal de jante est la dimension telle que définie dans le document « Engineering Design Information », 2017, de l'ETRTO (European Tyre and Rim Technical Organisation), paragraphe D, page GI.5.

De tels pressions nominales de gonflage, de tels rapports d'aspects et de tels diamètres nominaux de jante sont particulièrement adaptés à des pneumatiques destinés à équiper des véhicules du type "SUV" (« Sport Utility Vehicles » en anglais) ou de type petits poids-lourds (« light truck » en anglais) tels que par exemple des camions ou des camionnettes destinés à porter des charges lourdes.

Avantageusement, la force à rupture de la nappe de carcasse est supérieure ou égale à 300 daN.cm$^{-1}$, de préférence supérieure ou égale à 380 daN.cm$^{-1}$ et plus préférentiellement supérieure ou égale à 410 daN.cm$^{-1}$. De telles forces à rupture de nappe de carcasse permettent de réduire les dégâts subis par le pneumatique en cas de choc de type « pinch shock », comme par exemple le choc trottoir ou le passage dans un nid de poule.

On calcule la force à rupture d'une nappe à partir d'une courbe force-allongement obtenue en appliquant la norme ASTM D 885/D 885M - 10a de 2014 à un élément de renfort de la nappe. On détermine la force à rupture de la nappe en multipliant la force à rupture de l'élément de renfort par le nombre d'éléments de renfort par cm de nappe, ce nombre étant déterminé selon une direction perpendiculaire à la direction selon laquelle les éléments de renfort s'étendent dans la nappe.

Avantageusement, la force à rupture de l'élément de renfort va de 30 à 45 daN, de préférence de 33 à 43 daN et plus préférentiellement de 35 à 41 daN.

La force à rupture d'un élément de renfort est mesurée selon la norme ASTM D 885/D 885M - 10a de 2014.

Avantageusement, le diamètre d de l'élément de renfort est inférieur ou égal à 0,95 mm, de préférence inférieur ou égal à 0,80 mm, plus préférentiellement inférieur ou égal à 0,70 mm. L'élément de renfort s'étend selon une direction générale G et le diamètre de cet élément de renfort est le diamètre dans lequel est inscrit cet élément de renfort dans un plan de coupe perpendiculaire à la direction G.

Avantageusement, la nappe de carcasse étant obtenue à partir d'un composite comprenant plusieurs éléments de renfort agencés sensiblement parallèlement les uns aux autres, l'épaisseur Ep du composite est inférieure ou égale à 1,45 mm, de préférence, inférieure ou égale à 1,30 mm, plus préférentiellement inférieure ou égale à 1,20 mm. L'épaisseur du composite est la distance la plus courte entre les deux surfaces externes du composite, c'est-à-dire la distance mesurée selon une direction perpendiculaire aux deux surfaces externes du composite.

Par composite, on entend l'objet comprenant les éléments de renfort noyés dans une matrice polymérique et de préférence élastomérique.

Avantageusement, le rapport du diamètre de l'élément de renfort sur l'épaisseur de la nappe de carcasse d/Ep est strictement inférieur à 0,65, de préférence inférieur ou égal à 0,62. Dans un mode de réalisation, le rapport du diamètre de l'élément de renfort sur l'épaisseur de la nappe de carcasse est plus préférentiellement inférieur ou égal à 0,58. Ainsi, on diminue l'épaisseur de la nappe de carcasse et ainsi l'hystérèse des pneumatiques pour réduire la consommation d'énergie des véhicules équipés de tels pneumatiques.

Avantageusement, la nappe de carcasse étant obtenue à partir d'un composite comprenant plusieurs éléments de renfort agencés sensiblement parallèlement les uns aux autres, la densité d'éléments de renfort dans le composite va de 90 à 130 éléments de renfort par décimètre de composite, de préférence de 100 à 125 éléments de renfort par décimètre de composite et plus préférentiellement de 105 à 120 éléments de renfort par décimètre de composite. On détermine la densité d'éléments de renfort en comptant le nombre d'éléments de renfort par décimètre selon une direction perpendiculaire à la direction selon laquelle les éléments de renfort s'étendent dans le composite.

Dans ces intervalles de densité d'éléments de renfort, la nappe de carcasse présente une force à rupture relativement élevée et un coût relativement bas permettant son utilisation dans des pneumatiques adaptés à des véhicules du type petits poids-lourds et de type SUV.

De préférence, le pneumatique est tel que l'élément de renfort comprend un assemblage constitué de deux brins multifilamentaires.

Par « assemblage constitué », on entend que l'assemblage ne comprend pas d'autre brin multifilamentaire que les deux brins multifilamentaires de polyamide aromatique ou copolyamide aromatique et de polyester.

Le brin multifilamentaire de polyamide aromatique ou copolyamide aromatique et le brin multifilamentaire de polyester sont assemblés ensemble et sont enroulés en hélice l'un autour de l'autre.

Dans un mode de réalisation, l'élément de renfort est équilibré en torsions.

Par équilibré en torsions, on comprend que les deux brins multifilamentaires sont enroulés avec une torsion sensiblement identique et que la torsion des monofilaments de chaque brin multifilamentaire, c'est-à-dire la torsion des monofilaments du brin multifilamentaire de polyamide ou copolyamide aromatique et la torsion des monofilaments du brin de polyester est sensiblement nulle. En effet, le procédé de fabrication de ces éléments de renforts, bien connu de l'état de la technique, comprend une première étape durant laquelle, chaque filé de monofilaments (en anglais « yarn ») est tout d'abord individuellement tordu sur lui-même (selon une torsion initiale R1' et R2' avec R1'=R2') dans une direction donnée D'=D1'=D2' (respectivement sens S ou Z, selon une nomenclature reconnue désignant l'orientation des spires selon la barre transversale d'un S ou d'un Z), pour former un brin ou surtors (en anglais « strand ») dans lequel les monofilaments se voient imposer une déformation en hélice autour de l'axe du brin. Puis, au cours d'une seconde étape, les deux brins, sont ensuite retordus ensemble selon une torsion finale R3 telle que R3=R1'=R2' en direction D3 opposée à la direction D'=D1'=D2' (respectivement sens Z ou S), pour l'obtention de l'élément de renfort (en anglais « cord »). Cet élément de renfort est alors dit équilibré en torsion car les monofilaments des deux brins présentent, dans l'élément de renfort final, la même torsion résiduelle car R1'=R2'. Cette torsion résiduelle est nulle ou sensiblement nulle car R3=R1'=R2' et la direction D'=D1'=D2' est opposée à la direction D3. Par torsion résiduelle sensiblement nulle, on entend que la torsion résiduelle est strictement inférieure à 2,5% de la torsion R3.

Dans un autre mode de réalisation, l'élément de renfort est déséquilibré en torsions.

Par déséquilibré en torsions, on comprend que les deux brins multifilamentaires sont enroulés avec une torsion différente et que la torsion des monofilaments de chaque brin multifilamentaire, c'est-à-dire la torsion des monofilaments du brin multifilamentaire de polyamide ou copolyamide aromatique et la torsion des monofilaments du brin de polyester est non nulle. Cet élément de renfort comprend un unique brin de monofilaments textiles à haut module et un unique brin de monofilaments textiles à bas module, enroulés l'un autour de l'autre selon une direction D3 avec une torsion R3, le brin de monofilaments textiles à haut module présentant une torsion résiduelle R1 selon la direction D1, le brin de monofilaments textiles à bas module présente une éventuelle torsion résiduelle R2 selon la direction D2, les torsions résiduelles R1 et R2 étant telles que :

- R1>R2 dans le cas où R2 est sensiblement non-nulle
- R1 est sensiblement non nulle dans le cas où R2 est sensiblement nulle.

De préférence, les deux brins sont enroulés en hélice l'un autour de l'autre, le facteur de torsion K de l'élément de renfort va de 5,2 à 6,5 ; avec K défini par la formule K = (R $\times$ Ti$^{1/2}$) / 957 dans laquelle R est la torsion de l'élément de renfort exprimée en tours par mètre et Ti est la somme des titres des brins multifilamentaires de l'élément de renfort en tex.

Dans l'intervalle sélectionné de facteur de torsion, pour un titre donné, l'élément de renfort pour pneumatique présente une force à rupture relativement constante ce qui permet au concepteur du pneumatique, d'adapter d'autres caractéristiques de l'élément de renfort, notamment la torsion, à l'usage ou aux usages auxquels est destiné le pneumatique. En outre, dans l'intervalle sélectionné de facteur de torsion, l'élément de renfort présente une endurance compatible avec la plupart des usages des pneumatiques actuels.

Pour un titre donné, plus la torsion est grande, plus le risque industriel d'obtenir une dispersion importante de la force à rupture des éléments de renfort est élevé. Ainsi, par rapport à des éléments de renfort présentant, pour un titre donné, un facteur de torsion élevé, c'est-à-dire strictement supérieur à 6,5, l'intervalle sélectionné de facteur de torsion permet de choisir des éléments de renfort présentant une torsion plus faible, et donc susceptibles de conduire à moins de dispersion de la force à rupture de l'élément de renfort.

Le facteur de torsion, ci-après désigné par la lettre K (appelé Twist Multiplier en anglais) est défini par la formule:

$$K = (R \text{ x } Ti^{1/2}) / 957$$

dans laquelle R est la torsion de l'élément de renfort exprimée en tours par mètre (torsion R3 décrite dans le préambule de la présente demande) et Ti est la somme des titres des brins multifilamentaires de l'élément de renfort en tex.

La mesure de la torsion R de l'élément de renfort peut être réalisée par toute méthode connue par l'homme du métier, par exemple conformément à la norme ASTM D 885/D 885M - 10a de 2014.

Le titre (ou densité linéique) de chaque brin est déterminé selon la norme ASTM D1423. Le titre est donné en tex (poids en grammes de 1000 m de produit - rappel: 0, 111 tex égal à 1 denier).

Dans un mode de réalisation avantageux, l'élément de renfort comprend également une couche d'une composition adhésive revêtant l'assemblage constitué des deux brins. Une telle composition adhésive est par exemple de type RFL (acronyme pour Résorcinol-Formaldéhyde-Latex).

Avantageusement, le facteur de torsion K de l'élément de renfort va de 5,2 à 6,3 et de préférence de 5,2 à 6,1. Ainsi, pour un titre donné, on réduit encore davantage le risque de dispersion de la force à rupture de l'élément de renfort.

Avantageusement, la torsion de l'élément de renfort va de 250 à 405 tours par mètre, de préférence de 250 à 390 tours par mètre et encore plus préférentiellement de 250 à 380 tours par mètre. Pour un titre donné, dans cet intervalle de torsion, l'élément de renfort présente une endurance suffisante pour être utilisé dans un pneumatique adapté à des véhicules du type petits poids-lourds et de type SUV et un risque de dispersion de sa force à rupture relativement faible.

Avantageusement, le titre du brin multifilamentaire de polyamide aromatique ou copolyamide aromatique va de 140 à 210 tex, de préférence de 150 à 190 tex, plus préférentiellement de 160 à 180 tex. Dans l'intervalle de facteur de torsion conforme à l'invention, en utilisant des titres inférieurs aux intervalles décrits ci-dessus, l'élément de renfort présenterait une torsion relativement élevée ce qui conduirait à un risque de dispersion de la force à rupture. A l'inverse, dans l'intervalle de facteur de torsion conforme à l'invention, en utilisant des titres supérieurs aux intervalles décrits ci-dessus, l'élément de renfort présenterait une torsion relativement faible ce qui conduirait un risque de diminution de l'endurance. Ainsi, les intervalles de titre du brin multifilamentaire de polyamide aromatique ou copolyamide aromatique décrits ci-dessus permettent d'obtenir préférentiellement un bon compromis force à rupture-endurance.

Avantageusement, le titre du brin multifilamentaire de polyester va de 100 à 210 tex, de préférence de 120 à 190 tex, plus préférentiellement de 130 à 180 tex. Dans un mode de réalisation, le titre du brin multifilamentaire de polyester va encore plus préférentiellement de 160 à 180 tex. De façon analogue au titre du brin multifilamentaire de polyamide aromatique ou copolyamide aromatique, dans les intervalles de titres du brin multifilamentaire de polyester décrits ci-dessus, l'élément de renfort présente préférentiellement un bon compromis force à rupture-endurance.

Dans une première variante de l'élément de renfort, le facteur de torsion K va de 5,2 à 5,5, de préférence de 5,3 à 5,5 et encore plus préférentiellement de 5,3 à 5,4.

Dans cette première variante, la torsion de l'élément de renfort va avantageusement de 250 à 340 tours par mètre, de préférence de 260 à 325 tours par mètre, plus préférentiellement de 275 à 305 tours par mètre.

Dans une deuxième variante de l'élément de renfort, le facteur de torsion K va de 5,5 à 6,5, de préférence appartenant à l'intervalle ]5,5 ; 6,5] (c'est-à-dire excluant la valeur 5,5), préférentiellement de 5,6 à 6,1 et encore plus préférentiellement de 5,9 à 6,1.

Dans cette deuxième variante, la torsion de l'élément de renfort va avantageusement de 275 à 365 tours par mètre, de préférence de 275 à 350 tours par mètre, plus préférentiellement de 300 à 330 tours par mètre.

Dans chaque première et deuxième variante, pour un titre donné, dans cet intervalle de torsion, l'élément de renfort présente une endurance suffisante pour être utilisé dans un pneumatique adapté à la plupart des usages actuels et un risque de dispersion de sa force à rupture relativement faible.

## Premier mode de réalisation du pneumatique selon l'invention

Dans un premier mode de réalisation, l'invention s'applique à un pneumatique destiné à équiper des véhicules de type petits poids-lourds (« light truck » en anglais) tels que par exemple des camions ou des camionnettes destinés à porter des charges lourdes.

Dans ce premier mode de réalisation, la hauteur de flanc va de 139 à 223 mm et de préférence de 139 à 200 mm.

Dans ce premier mode de réalisation, l'indice de charge va de 100 à 125 et de préférence de 102 à 121.

Dans ce premier mode de réalisation, la pression nominale de gonflage va de 425 kPa à 575 kPa, de préférence de 450 kPa à 550 kPa et plus préférentiellement de 475 kPa à 525 kPa.

Une telle pression de gonflage est suffisamment élevée pour porter de fortes charges ce qui constitue un usage fréquent pour les pneumatiques destinés à équiper des véhicules du type petits poids-lourds.

Dans ce premier mode de réalisation, le rapport d'aspect va de 50 à 85, de préférence de 60 à 80 et plus préférentiellement de 65 à 75.

Dans ce premier mode de réalisation, le diamètre nominal de jante va de 14 à 20 pouces, de préférence de 15 à 19 pouces et plus préférentiellement de 15 à 17 pouces.

Afin d'une part, de ne pas trop surélever le véhicule et ainsi faciliter son chargement et d'autre part, de permettre le port de charges élevées, il est préférable que le diamètre nominal de jante aille de 15 à 17 pouces.

## Deuxième mode de réalisation du pneumatique selon l'invention

Dans un deuxième mode de réalisation, l'invention s'applique à un pneumatique destiné à équiper des véhicules de type type "SUV" (« Sport Utility Vehicles » en anglais).

Dans ce deuxième mode de réalisation, la hauteur de flanc est inférieure ou égale à 141 mm.

Dans ce deuxième mode de réalisation, l'indice de charge va de 100 à 115 et de préférence de 100 à 105.

Dans ce deuxième mode de réalisation, la pression nominale de gonflage va de 175 kPa à 425 kPa, de préférence de 200 kPa à 350 kPa et plus préférentiellement de 220 kPa à 300 kPa.

Dans ce deuxième mode de réalisation, le rapport d'aspect va de 35 à 70, de préférence de 40 à 65 et plus préférentiellement de 50 à 60.Dans ce deuxième mode de réalisation, le diamètre nominal de jante va de 17 à 22 pouces, de préférence de 17 à 20 pouces et plus préférentiellement de 17 à 19 pouces.

Afin d'une part de permettre de surélever suffisamment la caisse du véhicule pour le franchissement d'obstacles et d'autre part de présenter une taille harmonieuse avec la taille du véhicule sur lequel il est destiné à être monté, il est préférable que le diamètre nominal de jante aille de 17 à 19 pouces.

Dans un mode de réalisation, chaque bourrelet comportant au moins une structure annulaire de renfort, l'armature de carcasse radiale est ancrée dans chacun des bourrelets par un retournement autour de la structure annulaire de renfort.

Dans un autre mode de réalisation, l'armature de sommet comprend une armature de travail comprenant au moins une et de préférence deux nappes de travail. Optionnellement, chaque nappe de travail comprend plusieurs éléments de renfort de travail, de préférence métalliques, agencés côte à côte sensiblement parallèlement les uns aux autres. De tels éléments de renfort de travail forment un angle allant de 10° à 45° avec la direction circonférentielle du pneumatique. Avantageusement, dans le cas où l'armature de travail comprend deux nappes de travail, les éléments de renfort de travail sont croisés d'une nappe de travail par rapport à l'autre.

De préférence, l'armature de sommet comprend une armature de frettage disposée radialement extérieure à l'armature de travail. Avantageusement, la nappe de frettage comprend un ou plusieurs éléments de renfort de frettage, de préférence textile, agencés côte à côte sensiblement parallèlement les uns aux autres. De tels éléments de renfort de frettage forment un angle au plus égal à 10°, de préférence allant de 5° à 10° avec la direction circonférentielle du pneumatique.

Dans la présente demande, on entend par textile, de manière très générale, tout matériau en une matière autre que métallique, qu'elle soit naturelle comme synthétique, susceptible d'être transformée en fil, fibre ou film par tout procédé de transformation approprié. On peut citer par exemple, sans que les exemples ci-après soient limitatifs, un procédé de filage de polymère tel que par exemple filage au fondu, filage en solution ou filage de gel.

Bien que des matériaux en matière non polymérique (par exemple en matière minérale telle que du verre ou en matière organique non polymérique telle que carbone) soient compris dans la définition de matériau textile, l'invention est préférentiellement mise en oeuvre avec des matériaux en matière polymérique, tant du type thermoplastique que du type non thermoplastique.

A titre d'exemples de matières polymériques, du type thermoplastiques ou non, on citera par exemple les celluloses, notamment la rayonne, les alcools polyvinyliques (en abrégé « PVA »), les polycétones, les aramides (polyamides aromatiques), les polyesters aromatiques, les polybenzazoles (en abrégé « PBO »), les polyimides, les polyesters, notamment ceux choisis parmi PET (polyéthylène téréphthalate), PEN (polyéthylène naphthalate), PBT (polybutylène téréphthalate), PBN (polybutylène naphthalate), PPT' (polypropylène téréphthalate), PPN (polypropylène naphthalate).

Dans certains modes de réalisation, la nappe de carcasse est obtenue à partir d'un composite par conformation d'une ébauche de pneumatique. Dans ces modes de réalisation, on dispose d'un cylindre de confection présentant une forme générale toroïdale autour d'un axe du cylindre, le cylindre présentant une surface de pose au contact de laquelle on enroule un composite comprenant le ou les éléments de renfort noyés dans une matrice élastomérique à l'état cru, c'est-à-dire non réticulée, qui forme alors un enroulement cylindrique axialement et circonférentiellement continu. Le composite peut être posé directement au contact de la surface de pose ou bien sur une nappe radialement intérieure, par exemple une nappe d'étanchéité, elle-même enroulée au contact de la surface de pose. Dans la plupart des modes de réalisation, le composite est déposé selon un seul tour d'enroulement cylindrique. Optionnellement, on dispose d'autres nappes sur le composite.

Puis, on écarte radialement la surface de pose de l'axe du cylindre, par exemple par pressurisation par un gaz de gonflage d'un espace annulaire intérieur à la surface de pose, par exemple par de l'air. Cette étape est appelée conformation car on déforme l'ébauche de façon à obtenir une forme adaptée à la pose ultérieure de l'armature de sommet et de la bande de roulement. Cette conformation fait varier la densité d'élément de renfort de la nappe de carcasse obtenue à partir du composite selon que l'on se situe dans le bourrelet ou radialement sous l'armature de sommet. On obtient alors une ébauche conformée de pneumatique.

Ensuite, on dispose l'armature de sommet et la bande de roulement sur l'ébauche conformée de pneumatique.

Enfin, on rapproche radialement la surface de pose de l'axe du cylindre, par exemple par dépressurisation de l'espace annulaire.

On obtient alors le pneumatique à l'état cru. Enfin, on réticule le pneumatique, par exemple par vulcanisation, afin d'obtenir le pneumatique à l'état cuit.

L'invention a également pour objet un procédé de rodage d'un pneumatique dans lequel fait rouler le pneumatique selon l'invention.

Par rodage on entend le roulage du pneumatique pendant une certaine durée dans certaines conditions, cette durée et ces conditions dépendant notamment, de la charge, de la vitesse et du style de conduite du conducteur. Cette période de rodage va permettre d'abaisser la profondeur des déformations dans le flanc du pneumatique en dessous du seuil de perception de l'oeil. Ainsi, lors de cette période de rodage, on constate que le pneumatique selon l'invention présente une profondeur de déformation dans le flanc dont la diminution peut atteindre 25% par rapport au pneumatique neuf.

L'invention sera mieux comprise à la lumière de la description qui va suivre donnée uniquement à titre d'exemple non limitatif et faite en se référant aux dessins dans lesquels :

- la figure 1, présentée précédemment à des fins d'explications du problème des déformations de flancs, est une vue en coupe d'une nappe de carcasse comprenant des éléments de renfort lors de procédé de fabrication du pneumatique, la coupe étant perpendiculaire aux éléments de renfort. ;
- la figure 2, présentée précédemment à des fins d'explications du problème des déformations de flancs, est une vue analogue à celle de la figure 1 à l'issue du procédé de fabrication du pneumatique;
- la figure 3, présentée précédemment à des fins d'explications du problème des déformations de flancs, est une courbe force-allongement d'un élément de renfort de la nappe de carcasse des figures 1 et 2;
- la figure 4a est une vue en coupe radiale d'un pneumatique selon un premier mode de réalisation de l'invention ;
- la figure 4b est une vue en coupe radiale d'un pneumatique selon un deuxième mode de réalisation de l'invention ;
- la figure 5 illustre une vue schématique d'un composite destiné à former la nappe de carcasse de chaque pneumatique des figures 4a et 4b ;
- la figure 6 illustre une vue en coupe de la nappe de carcasse de la figure 5 selon le plan V-V';
- la figure 7 est une représentation schématique de la structure des éléments de renfort de chaque nappe de carcasse de chaque pneumatique des figures 4a et 4b ; et
- la figure 8 est un agrandissement d'une vue en coupe de l'élément de renfort de la nappe de carcasse du pneumatique de la figure 4a.

Par « coupe radiale » ou « section radiale » on entend ici une coupe ou une section selon un plan qui comporte l'axe de rotation du pneumatique.

Le « plan circonférentiel médian » M du pneumatique est le plan qui est normal à l'axe de rotation du pneumatique et qui se situe à équidistance des structures annulaires de renfort de chaque bourrelet.

Le « plan circonférentiel équatorial » E du pneumatique est le plan théorique passant par l'équateur du pneumatique, perpendiculaire au plan médian et à la direction radiale. L'équateur du pneumatique est, dans un plan de coupe circonférentielle (plan perpendiculaire à la direction circonférentielle et parallèle aux directions radiale et axiales) l'axe parallèle à l'axe de rotation du pneumatique et située à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Une direction « axiale » est une direction parallèle à l'axe de rotation du pneumatique.

Une direction « circonférentielle » est une direction qui est perpendiculaire à la fois à un rayon du pneumatique et à la direction axiale.

Dans la présente demande, sauf indication contraire, tout intervalle de valeurs désigné par l'expression « de a à b » signifie le domaine de valeurs allant de la borne « a » jusqu'à la borne « b » c'est-à-dire incluant les bornes strictes « a » et « b ».

## PNEUMATIQUE SELON UN PREMIER MODE DE REALISATION L'INVENTION

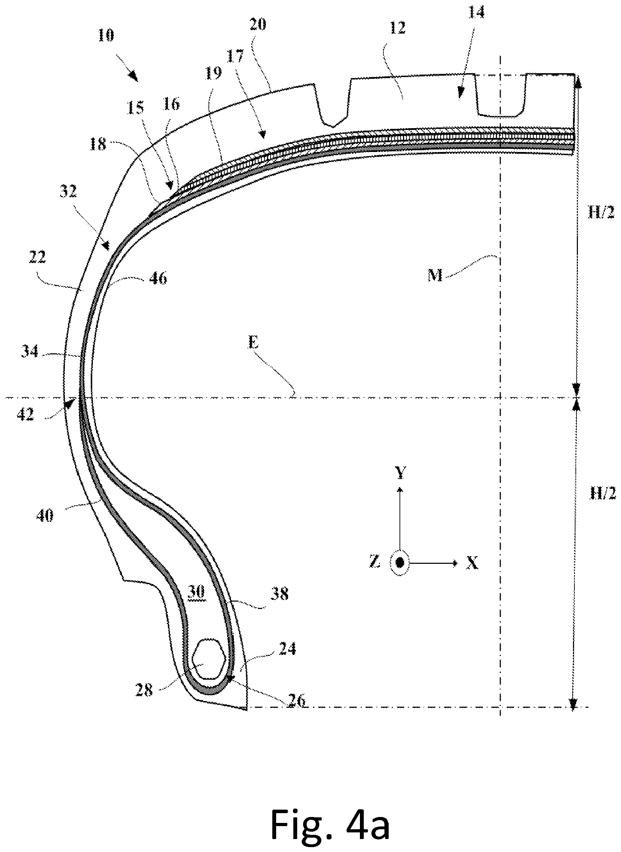

Sur la figure 4a, on a représenté un repère X, Y, Z correspondant aux directions habituelles respectivement axiale (X), radiale (Y) et circonférentielle (Z) d'un pneumatique.

### Architecture du pneumatique

On a représenté schématiquement sur la figure 4a, une vue en coupe radiale, d'un pneumatique selon un premier mode de réalisation de l'invention et désigné par la référence générale 10. Le pneumatique 10 est sensiblement de révolution autour d'un axe sensiblement parallèle à la direction axiale X.

Le pneumatique 10 présente une hauteur de flanc est supérieure ou égale à 110 mm, voire supérieure ou égale à 120 mm, de préférence supérieure ou égale à 130 mm et encore plus préférentiellement supérieure ou égale à 140 mm et inférieure ou égale à 220 mm, de préférence inférieure ou égale à 210 mm et encore plus préférentiellement inférieure ou égale à 200 mm. Le pneumatique 10 présente un indice de charge supérieur ou égal à 100 et inférieur ou égal à 130, de préférence inférieur ou égal à 125 et plus préférentiellement inférieur ou égal à 121. Le pneumatique 10 présente une pression nominale de gonflage supérieure ou égale à 200 kPa, de préférence supérieure ou égale à 220 kPa et plus préférentiellement supérieure ou égale à 250 kPa et inférieure ou égale à 600 kPa, de préférence inférieure ou égale à 585 kPa et plus préférentiellement inférieure ou égale à 575 kPa. Le pneumatique 10 présente un rapport d'aspect allant de 35 à 95 et de préférence de 40 à 80. Le pneumatique 10 présente un diamètre nominal de jante allant de 13 à 22 pouces et de préférence de 14 à 21 pouces.

Dans ce premier mode de réalisation, le pneumatique 10 est ici destiné à un véhicule de type petit poids-lourds et présente la dimension 215/75 R16 113/111R.

Ainsi, la hauteur de flanc du pneumatique 10 va de 139 à 223 mm et de préférence de 139 à 200 mm et est ici égale à 161 mm. L'indice de charge va de 100 à 125 et de préférence de 102 à 121 et est ici égal à 113/111. La pression nominale de gonflage va de 425 kPa à 575 kPa, de préférence de 450 kPa à 550 kPa et plus préférentiellement de 475 kPa à 525 kPa et est ici égale à 475 kPa. Le rapport d'aspect va de 50 à 85, de préférence de 60 à 80 et plus préférentiellement de 65 à 75 et est ici égal à 75. Le diamètre nominal de jante va de 14 à 20 pouces, de préférence de 15 à 19 pouces et plus préférentiellement de 15 à 17 pouces et est ici égal à 16 pouces.

Le pneumatique 10 comporte un sommet 12 comprenant une armature de sommet 14 comprenant une armature de travail 15 comprenant deux nappes de travail 16, 18 d'éléments de renfort de travail et une armature de frettage 17 comprenant une nappe de frettage 19 d'éléments de renfort de frettage. L'armature de sommet 14 s'étend dans le sommet 12 selon la direction circonférentielle Z du pneumatique 10. Le sommet 12 comprend une bande de roulement 20 agencée radialement extérieure à l'armature de sommet 14. Ici, l'armature de frettage 17, ici la nappe de frettage 19, est radialement intercalée entre l'armature de travail 15 et la bande de roulement 20.

Le pneumatique 10 comprend également deux flancs 22 prolongeant le sommet 12 radialement vers l'intérieur. Le pneumatique 10 comporte en outre deux bourrelets 24 radialement intérieur aux flancs 22 et comportant chacun une structure annulaire de renfort 26, en l'occurrence une tringle 28, surmontée d'une masse de gomme 30 de bourrage sur tringle, ainsi qu'une armature de carcasse radiale 32. Chaque flanc 22 relie chaque bourrelet 24 au sommet 12.

L'armature de carcasse 32 comporte une nappe de carcasse 34 comprenant plusieurs éléments de renfort, la nappe de carcasse 34 étant ancrée à chacun des bourrelets 24 par un retournement autour de la tringle 28, de manière à former dans chaque bourrelet 24 un brin aller 38 s'étendant depuis les bourrelets à travers les flancs vers le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 dans et à travers les flancs 22 jusque dans le sommet 12. L'armature de carcasse 32 est agencée radialement à l'intérieur de l'armature de sommet 14 et de l'armature de frettage 17. L'armature de sommet 14 est donc radialement intercalée entre l'armature de carcasse 32 et la bande de roulement 20. L'armature de carcasse 32 comprend une seule et unique nappe carcasse 34, ici est constituée de la nappe de carcasse 34.

L'armature de carcasse 32 est radiale dans chaque flanc 22 et dans le sommet 12. Ainsi, chaque élément de renfort fait un angle allant de 80° à 90° avec la direction circonférentielle du pneumatique 10 dans les plans médian M et équatorial E du pneumatique 10.

Le pneumatique 10 comprend également une couche interne 46 d'étanchéité, de préférence en butyl, située axialement intérieure aux flancs 22 et radialement intérieure à l'armature de sommet 14 et s'étendant entre les deux bourrelets 24.

Chaque nappe de travail 16, 18, de frettage 19 et de carcasse 34 comprend une composition polymérique dans laquelle sont noyés des éléments de renfort de la nappe correspondante. Chaque composition polymérique, ici une composition élastomérique, des nappes de travail 16, 18, de frettage 19 et de carcasse 34 est réalisée dans une composition conventionnelle pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs.

### Nappe de carcasse du pneumatique 10

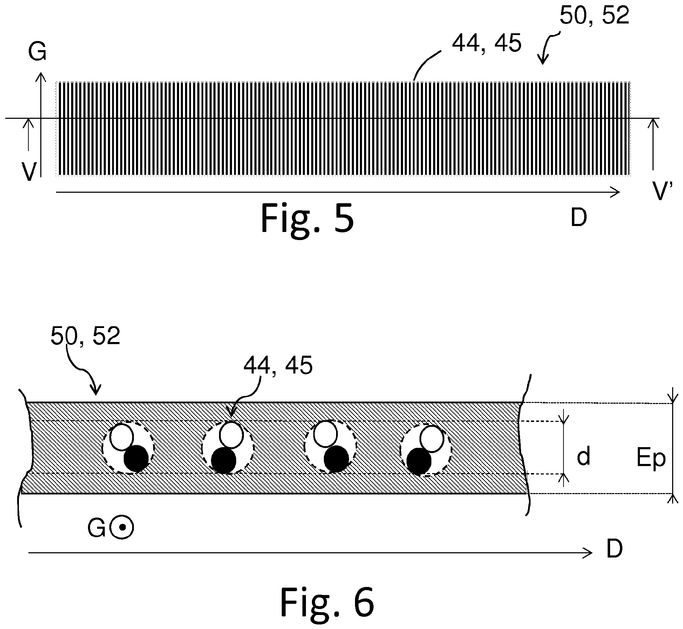

On va maintenant décrire en référence aux figures 5 et 6, un composite 50 destiné à former la nappe de carcasse 34 du pneumatique 10.

Le composite 50 comprend plusieurs éléments de renfort 44. Les éléments de renfort 44 sont agencés côte à côte parallèlement les uns aux autres selon une direction principale D sensiblement perpendiculaire à la direction générale G selon laquelle les éléments de renfort du composite 50 s'étendent, la direction générale G faisant, une fois le composite 50 formant la nappe de carcasse 34 au sein du pneumatique 10, un angle allant de 80° à 90° avec la direction circonférentielle Z du pneumatique 10. En l'espèce, la direction générale G fait, une fois le composite 50 formant la nappe de carcasse 34 au sein du pneumatique 10, un angle sensiblement égal à 90° avec la direction circonférentielle Z du pneumatique 10.

La densité d'éléments de renfort 44 dans le composite 50 va de 90 à 130 éléments de renfort par décimètre de composite 50, de préférence de 100 à 125 éléments de renfort par décimètre de composite 50, plus préférentiellement de 105 à 120 éléments de renfort par décimètre de composite 50 et ici égale à 110 éléments de renforts par décimètre de composite 50.

L'épaisseur Ep du composite 50 est inférieure ou égale à 1,45 mm, et de préférence, inférieure ou égale à 1,30 mm et ici égale à 1,28 mm.

La densité d'éléments de renfort et l'épaisseur Ep décrites ci-dessus sont, comme expliqué précédemment, la densité d'éléments de renfort 44 et l'épaisseur Ep du composite 50. Dans le pneumatique 10, la nappe de carcasse 34 étant obtenue à partir du composite 50 par conformation d'une ébauche de pneumatique, la densité d'éléments de renfort ainsi que l'épaisseur Ep de la nappe de carcasse 34 sont différentes de celles du composite et varient selon que l'on se trouve plus ou moins proche de l'axe de révolution du pneumatique. Ces variations sont notamment dépendantes du taux de conformation de l'ébauche du pneumatique mais également de sa géométrie. A partir notamment du taux de conformation de l'ébauche du pneumatique et de sa géométrie, l'homme du métier saura déterminer les caractéristiques du composite correspondant.

Le diamètre d de l'élément de renfort est inférieur ou égal à 0,95 mm, de préférence inférieur ou égal à 0,80 mm, plus préférentiellement inférieur ou égal à 0,70 mm et est ici égal à 0,67 mm.

Le rapport d/Ep est strictement inférieur à 0,65, de préférence inférieur ou égal à 0,62 et est ici égal à 0,52.

La force à rupture de la nappe de carcasse est supérieure ou égale à 300 daN.cm$^{-1}$, de préférence supérieure ou égale à 380 daN.cm$^{-1}$ et plus préférentiellement supérieure ou égale à 410 daN.cm$^{-1}$ et est ici égale à 440 daN.cm$^{-1}$.

### Eléments de renfort de la nappe de carcasse du pneumatique 10

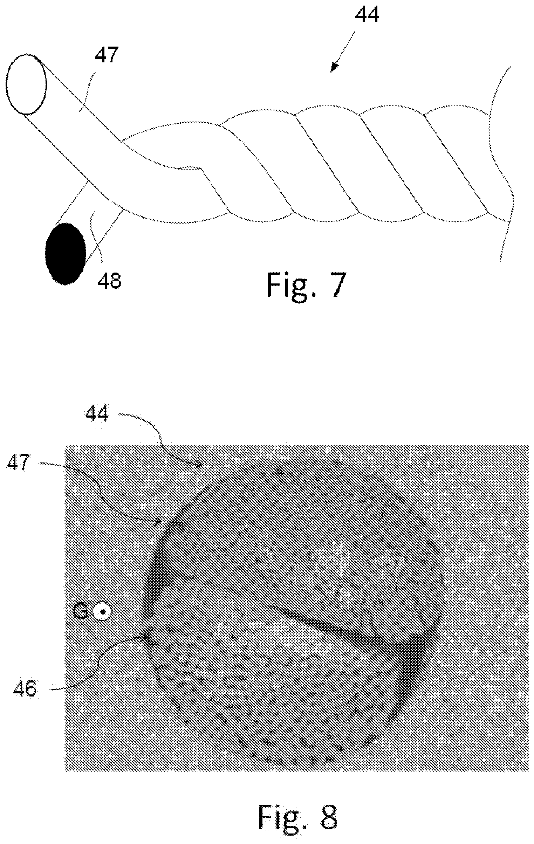

Comme représenté schématiquement sur la figure 7, l'élément de renfort 44, comprend un assemblage constitué d'un brin multifilamentaire 47 en polyamide aromatique ou copolyamide aromatique et d'un brin multifilamentaire 48 en polyester, les deux brins 47, 48 étant enroulés en hélice l'un autour de l'autre. L'élément de renfort 44 est équilibré en torsions. A des fins de précision de la description, la figure 8 est une vue en coupe de l'élément de renfort 44 et sur laquelle on distingue les monofilaments de chacun des brins.

Le polyamide aromatique choisi est ici préférence un para-aramide, connu sous la dénomination commerciale Twaron 1000 de la société Teijin. Le polyester est le polyéthylène téréphtalate (PET), connu sous la dénomination commerciale PET HMLS (High Module Low Shrinkage) des sociétés Hyosung ou Hailide.

Dans certains modes de réalisation non représentés, l'élément de renfort 44 comprend une ou plusieurs couches d'une composition adhésive revêtant l'assemblage.

### Titre de l'élément de renfort 44

Le titre du brin multifilamentaire 47 en polyamide aromatique ou copolyamide aromatique va de 140 à 210 tex, de préférence de 150 à 190 tex, plus préférentiellement de 160 à 180 tex. Dans le premier mode de réalisation, le titre du brin 47 de l'élément de renfort 44 est égal à 167 tex.

Le titre du brin multifilamentaire 48 en polyester va de 100 à 210 tex, de préférence de 120 à 190 tex, plus préférentiellement de 130 à 180 tex. Dans le premier mode de réalisation, le titre du brin 48 de l'élément de renfort 44 est égal à 167 tex.

### Torsion de l'élément de renfort 44

La torsion R de l'élément de renfort 44 va de 250 à 405 tours par mètre, de préférence de 250 à 390 tours par mètre, plus préférentiellement de 250 à 380 tours par mètre. Dans le premier mode de réalisation, la torsion de l'élément de renfort va avantageusement de 275 à 365 tours par mètre, de préférence de 275 à 350 tours par mètre, plus préférentiellement de 300 à 330 tours par mètre et est ici égale à 315 tours par mètre.

### Facteur de torsion de l'élément de renfort 44

Le facteur de torsion K de l'élément de renfort 44 va de 5,2 à 6,5, de préférence de 5,2 à 6,3, plus préférentiellement de 5,2 à 6,1.

Dans le premier mode de réalisation, le facteur de torsion K de l'élément de renfort 44 est égal à $315 \times (167+167)^{1/2} / 957 = 6,0$.

La force à rupture de l'élément de renfort 44 va de 30 à 45 daN, de préférence de 33 à 43 daN et plus préférentiellement de 35 à 41 daN et est ici égale à 40 daN.

### Procédé de fabrication de l'élément de renfort 44

Comme décrit précédemment, chaque élément de renfort 44 est équilibré en torsions, c'est-à-dire que les deux brins multifilamentaires sont enroulés avec une torsion sensiblement identique et que la torsion des monofilaments de chaque brin multifilamentaire est sensiblement nulle. Dans une première étape, chaque filé de monofilaments (en anglais « yarn ») est tout d'abord individuellement tordu sur lui-même selon une torsion initiale égale à 315 tours par mètre dans une direction donnée, ici le sens Z, pour former un brin ou surtors (en anglais « strand »). Puis, au cours d'une seconde étape, les deux brins, sont ensuite retordus ensemble selon une torsion finale égale à 315 tours par mètre en direction S pour l'obtention de l'assemblage de l'élément de renfort (en anglais « cord »). Dans des étapes ultérieures, chaque assemblage est revêtu d'une composition adhésive, par exemple une composition adhésive de type RFL (acronyme pour Résorcinol-Formaldéhyde-Latex) et subit des étapes de traitement thermiques afin de faire réticuler, au moins en partie, la composition adhésive.

### Procédé de fabrication de la nappe de carcasse 34

Pour obtenir la nappe de carcasse 34, on fabrique d'abord le composite 50 en noyant plusieurs éléments de renfort 44 dans une composition d'élastomère, par exemple par calandrage. Durant une telle étape de calandrage, bien connue de l'homme du métier, on fait on fait défiler des éléments de renforts et on amène deux bandes réalisées dans une composition d'élastomère, appelées skims, de part et d'autre des éléments de renfort de façon à prendre en sandwich les éléments de renforts entre les deux skims. On noie ainsi les éléments de renfort dans la composition d'élastomère.

### Procédé de fabrication du pneumatique 10

Le procédé de fabrication du pneumatique est celui utilisé classiquement par l'homme du métier. Au cours de ce procédé et comme déjà décrit précédemment, on dispose successivement, lors d'une première série d'étapes d'assemblages, différents composites, dont le composite 50 destiné à former la nappe de carcasse 34. Puis, on conforme l'ébauche ainsi obtenue. Ensuite, on dispose d'autres composites destinés à former les nappes 16, 18, 19 du sommet 12 du pneumatique 10. Enfin, on vulcanise l'ébauche ainsi obtenue pour obtenir le pneumatique 10.

### PNEUMATIQUE SELON UN DEUXIEME MODE DE REALISATION DE L'INVENTION

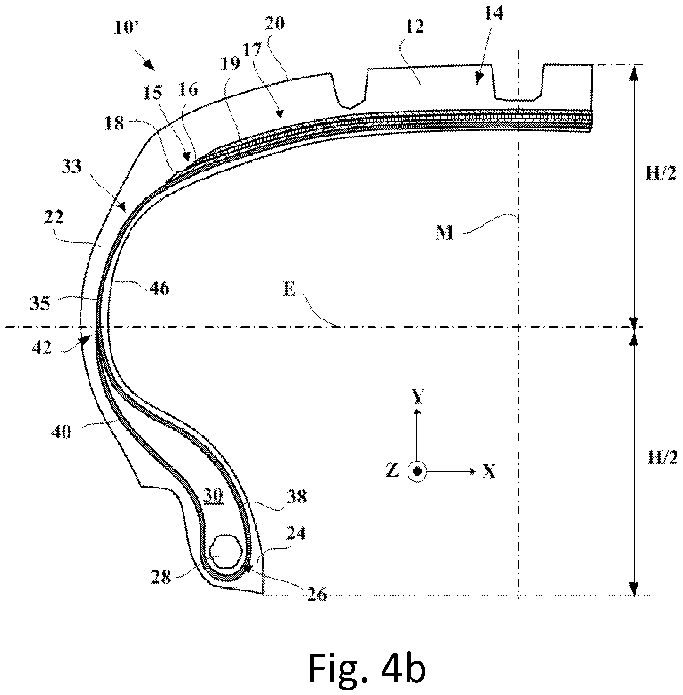

On a représenté en figure 4b, un pneumatique 10' selon un deuxième mode de réalisation de l'invention. Les éléments analogues à ceux du premier mode de réalisation sont désignés par des références identiques à l'exception du composite 52, de l'armature de carcasse 33, de la nappe de carcasse 35 et de l'élément de renfort 45. Pour des raisons de concisions, on ne décrira que les différences par rapport au premier mode de réalisation.

A la différence du pneumatique 10 selon le premier mode de réalisation, le pneumatique 10' selon le deuxième mode de réalisation est ici destiné à un véhicule de type SUV et présente une dimension 255/50 R19 107W

Ainsi, la hauteur de flanc du pneumatique 10' est inférieure ou égale à 141 mm et est ici égale à 128 mm. L'indice de charge va de 100 à 115 et de préférence de 100 à 105 et est ici égal à 107. La pression nominale de gonflage va de 175 kPa à 425 kPa, de préférence de 200 kPa à 350 kPa et plus préférentiellement de 220 kPa à 300 kPa et est ici égale à 290 kPa. Le rapport d'aspect va de 35 à 70, de préférence de 40 à 65 et plus préférentiellement de 50 à 60 et est ici égal à 50. Le diamètre nominal de jante va de 17 à 22 pouces, de préférence de 17 à 20 pouces et plus préférentiellement de 17 à 19 pouces et est ici égal à 19 pouces.

### Nappe de carcasse du pneumatique 10'

La densité d'éléments de renfort 45 dans le composite 52 ici égale à 116 éléments de renforts par décimètre de composite 52. L'épaisseur Ep du composite 52 est inférieure ou égale à 1,45 mm, de préférence, inférieure ou égale à 1,30 mm, plus préférentiellement inférieure ou égale à 1,20 mm et est ici égale à 1,16 mm. Le diamètre d de l'élément de renfort 45 est égal à 0,65 mm. Le rapport d/Ep est ici égal à 0,56.

La force à rupture de la nappe de carcasse 33 est ici égale à 430 daN.cm$^{-1}$.

### Eléments de renfort de la nappe de carcasse du pneumatique 10'

Le titre du brin 47 de l'élément de renfort 45 est également égal à 167 tex et le titre du brin 48 de l'élément de renfort 45 est égal à 144 tex.

Dans ce deuxième mode de réalisation, la torsion de l'élément de renfort 45 va de 250 à 340 tours par mètre, de préférence de 260 à 325 tours par mètre, plus préférentiellement de 275 à 305 tours par mètre et est ici égale à 290 tours par mètre.

Dans ce deuxième mode de réalisation, le facteur de torsion K va de 5,2 à 5,5, de préférence de 5,3 à 5,5 et encore plus préférentiellement de 5,3 à 5,4 et est ici de 5,3.

La force à rupture de l'élément de renfort 45 est ici égale à 37 daN.

**Procédé de fabrication de l'élément de renfort 45, de la nappe de carcasse 35 et du pneumatique 10'**

On fabrique l'assemblage de l'élément de renfort 45 *mutatis mutandis* par rapport à l'élément de renfort 44 en appliquant une torsion égale à 290 tours par mètre.

Les procédés de fabrication de la nappe de carcasse 35 et du pneumatique 10' se déduisent *mutatis mutandis* de ceux décrits précédemment dans le premier mode de réalisation.

**MESURES ET TESTS COMPARATIFS**

On a résumé dans le tableau 1 les caractéristiques des éléments de renfort 44, 45 respectivement des pneumatiques 10, 10' selon l'invention et de l'élément de renfort ET d'un pneumatique de l'état de la technique et d'un élément de renfort EC d'un pneumatique comparatif. On a également rassemblé les caractéristiques des composites CT, CC, 50 et 52 correspondants.

| Elément de renfort | ET | EC | 44 | 45 |
|---|---|---|---|---|
| Nature des brins | PET/PET | PET/PET | p-Aramide/PET | p-Aramide/PET |
| Torsion (t/m) | 420 | 270 | 315 | 290 |
| Titre des brins (tex) | 144/144 | 334/334 | 167/167 | 167/144 |
| Facteur de torsion K | 7,4 | 7,3 | 5,9 | 5,3 |
| Force à rupture (daN) | 19 | 40 | 40 | 37 |
| Composite | CT | CC | 50 | 52 |
| Densité (fils/dm) | 123 | 80 | 110 | 116 |
| Ep (mm) | 1,17 | 1,47 | 1,28 | 1,16 |
| d (mm) | 0,62 | 0,96 | 0,67 | 0,65 |
| d/Ep | 0,53 | 0,65 | 0,52 | 0,56 |
| Force à rupture (daN/cm) | 228 | 328 | 440 | 430 |

**Tableau 1**

Comparaison des pneumatiques

On a résumé dans le tableau 2 les caractéristiques des pneumatiques 10, 10' des premier et deuxième modes de réalisation selon l'invention, d'un pneumatique PT' de l'état de la technique ayant deux nappes de carcasse formées chacune par un composite CT et d'un pneumatique PC' ayant une seule nappe de carcasse formé par un composite CC.

**Tableau 2**

| | PT | PT' | PC' | 10 | 10' |
|---|---|---|---|---|---|
| Désignation du pneumatique | 215/75 R16 113/111 R | 255/50 R19 107W | 255/50 R19 107W | 215/75 R16 113/111 R | 255/50 R19 107W |
| Nombre de nappe de carcasse | 2 × CT | 2 × CT | 1 × CC | 1 × 50 | 1 × 52 |
| Hauteur de flanc (mm) | 161 | 128 | 128 | 161 | 128 |

(suite)

|  | PT | PT' | PC' | 10 | 10' |
|---|---|---|---|---|---|
| Indice de charge | 113/111 | 107 | 107 | 113/111 | 107 |
| Pression nominale de gonflage (kPa) | 475 | 290 | 290 | 475 | 290 |
| Rapport d'aspect | 75 | 50 | 50 | 75 | 50 |
| Diamètre nominal de jante (pouces) | 16 | 19 | 19 | 16 | 19 |

On a tout d'abord comparé entre elles, d'une part, les masses des pneumatiques PT et 10 et d'autre part les masses de pneumatiques PT', PC' et 10' en pesant les pneumatiques testés. Les résultats sont indiqués en base 100 par rapport aux pneumatique PT et PT'. Une masse inférieure à 100 signifie que le pneumatique est allégé par rapport au pneumatique de référence PT ou PT'.

On également comparé la profondeur de déformation dans le flanc des pneumatiques PT, PT', PC', 10 et 10' avant et après rodage. La profondeur de déformation dans le flanc initiale est mesurée sur un pneumatique neuf avant rodage. La profondeur de déformation dans le flanc après rodage est déterminée en faisant rouler chaque pneumatique testé sur une distance et une vitesse déterminées ici 200 km à 100 km/h à la pression de 400 kPa.

On mesure la profondeur de déformation dans le flanc à l'aide d'un palpeur de mesure, par exemple de la société AKRON, qui est positionné sur une zone adaptée et pertinente du pneumatique. La mesure s'effectue de préférence sur la zone à l'équateur.

Les résultats de ces différents tests sont rassemblés dans le tableau 3 ci-dessous.

**Tableau 3**

|  | PT | PT' | PC' | 10 | 10' |
|---|---|---|---|---|---|
| Déformation de flanc initiale ($\mu$m) | 320 | 250 | 300 | 580 | 700 |
| Déformation de flanc après rodage ($\mu$m) | 432 | 340 | 350 | 377 | 520 |
| Evolution de la déformation (%) | +35% | +36% | +17% | -35% | -26% |
| Masse | 100 | / | / | 94 | / |
| Masse | / | 100 | 96 | / | 94 |

Le pneumatique 10 présente une masse réduite par rapport au pneumatique PT et permet néanmoins de porter une charge équivalente malgré la présence d'une unique nappe de carcasse.

On note que le pneumatique 10' présente une masse réduite par rapport aux pneumatiques PT' et PC'. Le pneumatique 10', grâce à une nappe de carcasse conforme à l'invention, permet de porter une charge plus élevée que le pneumatique PC' et plus élevée que le pneumatique PT' sans pour autant nécessiter l'utilisation de deux nappes de carcasse.

Le pneumatique 10' selon l'invention présente une profondeur de déformation dans le flanc qui diminue de 26% après rodage. On constate que la profondeur de déformation dans le flanc du pneumatique de l'état de la technique PT' augmente de 35% après rodage à indice de charge équivalent. Ainsi, bien que le pneumatique 10' présente une profondeur de déformation dans le flanc dépassant le seuil de perception de l'oeil humain à l'issue de son procédé de fabrication, après rodage, on constate que la profondeur de déformation dans le flanc du pneumatique 10' diminue fortement passant alors sous le seuil de perception de l'oeil humain alors que la profondeur de déformation dans le flanc du pneumatique PT' va s'amplifier fortement.

A la différence du pneumatique 10', le pneumatique 10 présente une profondeur de déformations de flanc inférieure au seuil de perception de l'oeil humain avant rodage mais néanmoins relativement proche de ce seuil. Comme pour le pneumatique 10', après rodage, on constate que la profondeur de déformation dans le flanc du pneumatique 10 diminue fortement, pour atteindre une valeur largement sous le seuil de perception de l'oeil humain alors que la profondeur de déformation dans le flanc du pneumatique PT va s'amplifier fortement.

On a également testé la différence de profondeur de déformations de flanc de pneumatiques 101 et 102 analogues architecturalement au pneumatique 10 à la différence que les composites formant ces pneumatiques ont les caractéristiques suivantes regroupées dans tableau 4 ci-dessous:

| Elément de renfort | 44 | 441 | 442 |
|---|---|---|---|
| Nature des brins | p-Aramide/PET | p-Aramide/PET | p-Aramide/PET |
| Torsion (t/m) | 315 | 325 | 290 |
| Titre des brins (tex) | 167/167 | 167/144 | 167/144 |
| Facteur de torsion K | 5,9 | 6,0 | 5,3 |
| Composite | 50 | 50 | 50 |
| Densité (fils/dm) | 110 | 116 | 116 |
| Pneumatique | 10 | 101 | 102 |
| Déformation de flanc initiale (µm) | 580 | 747 | 581 |
| Déformation de flanc après rodage (µm) | 377 | 538 | 482 |
| Evolution de la déformation (%) | -35% | -28% | -17% |

**Tableau 4**

On note qu'en faisant varier le titre et la torsion pour une même architecture du pneumatique, on constate que, après rodage, comme pour le pneumatique 10, la profondeur de déformation dans le flanc des pneumatiques 101 et 102 diminue, pour atteindre une valeur sous le seuil de perception de l'oeil humain.

Ainsi, comme le montrent les essais comparatifs ci-dessus, l'invention consiste bien en un pneumatique présentant une hauteur de flanc supérieure ou égale à 110 mm et un indice de charge supérieur ou égal à 94 et en la combinaison d'une seule nappe de carcasse et d'un élément de renfort hybride permettant d'alléger le pneumatique tout en rendant les déformations de flancs invisibles pour le client après une période de rodage.

L'invention ne se limite pas aux modes de réalisation précédemment décrits, mais elle n'est limitée qu'à la portée des revendications annexées.

**Revendications**

1. Pneumatique (10 ;10') comprenant un sommet (12) comprenant une bande de roulement (20) et une armature de sommet (14), deux flancs (22), deux bourrelets (24), chaque flanc (22) reliant chaque bourrelet (24) au sommet (12), l'armature de sommet (14) s'étendant dans le sommet (12) selon une direction circonférentielle (Z) du pneumatique (10), le pneumatique (10) comprenant une armature de carcasse radiale (32) ancrée dans chacun des bourrelets (24) et s'étendant dans les flancs (22), l'armature de sommet (14) étant radialement intercalée entre l'armature de carcasse (32 ;33) et la bande de roulement (20), que l'armature de carcasse radiale (32 ; 33) comprend une unique nappe de carcasse (34 ; 35) comprenant au moins un élément de renfort (44 ;45) comprenant un assemblage constitué de plusieurs brins multifilamentaires comprenant:

   • au moins un brin multifilamentaire de polyamide aromatique ou copolyamide aromatique (46), et
   • au moins un brin multifilamentaire de polyester (48),

   **caractérisé en ce que** le pneumatique (10 ;10') présente une hauteur de flanc supérieure ou égale à 110 mm et un indice de charge supérieur ou égal à 100.

2. Pneumatique (10 ;10') selon la revendication précédente, dans lequel la hauteur de flanc est supérieure ou égale à 120 mm, de préférence supérieure ou égale à 130 mm et encore plus préférentiellement supérieure ou égale à 140 mm.

3. Pneumatique (10 ;10') selon l'une quelconque des revendications précédentes, dans lequel la hauteur de flanc est inférieure ou égale à 220 mm, de préférence inférieure ou égale à 210 mm et encore plus préférentiellement inférieure ou égale à 200 mm.

4. Pneumatique (10) selon la revendication 1, dans lequel la hauteur de flanc va de 139 à 223 mm et de préférence de 139 à 200 mm.

**5.** Pneumatique (10') selon la revendication 1, dans lequel la hauteur de flanc est inférieure ou égale à 141 mm.

**6.** Pneumatique (10 ;10') selon l'une quelconque des revendications précédentes, dans lequel l'indice de charge est inférieur ou égal à 130, de préférence inférieur ou égal à 125 et plus préférentiellement inférieur ou égal à 121.

**7.** Pneumatique (10 ;10') selon l'une quelconque des revendications précédentes, dans lequel la pression nominale de gonflage est supérieure ou égale à 200 kPa, de préférence supérieure ou égale à 220 kPa et plus préférentiellement supérieure ou égale à 250 kPa.

**8.** Pneumatique (10 ;10') selon l'une quelconque des revendications précédentes, dans lequel la pression nominale de gonflage est inférieure ou égale à 600 kPa, de préférence inférieure ou égale à 585 kPa et plus préférentiellement inférieure ou égale à 575 kPa.

**9.** Pneumatique (10') selon l'une quelconque des revendications 1 à 6, dans lequel la pression nominale de gonflage va de 175 kPa à 425 kPa, de préférence de 200 kPa à 350 kPa et plus préférentiellement de 220 kPa à 300 kPa.

**10.** Pneumatique (10 ;10') selon l'une quelconque des revendications précédentes, présentant un rapport d'aspect allant de 35 à 95 et de préférence de 40 à 80.

**11.** Pneumatique (10 ;10') selon l'une quelconque des revendications précédentes, présentant un diamètre nominal de jante allant de 13 à 22 pouces et de préférence de 14 à 21 pouces.

**12.** Pneumatique (10 ;10') selon l'une quelconque des revendications précédentes, dans lequel l'élément de renfort (44 ;45) comprend un assemblage constitué de deux brins multifilamentaires.

**13.** Pneumatique (10 ;10') selon la revendication précédente, dans lequel les deux brins étant enroulés en hélice l'un autour de l'autre, le facteur de torsion K de l'élément de renfort (44 ;45) va de 5,2 à 6,5 avec K défini par la formule $K = (R \times Ti^{1/2}) / 957$ dans laquelle R est la torsion de l'élément de renfort (44 ;45) exprimée en tours par mètre et Ti est la somme des titres des brins multifilamentaires de l'élément de renfort (44 ;45) en tex.

**14.** Procédé de rodage d'un pneumatique (10 ;10'), **caractérisé en ce qu'**on fait rouler un pneumatique (10 ;10') selon l'une quelconque des revendications précédentes.

**Patentansprüche**

**1.** Reifen (10; 10'), welcher einen Scheitel (12), der einen Laufstreifen (20) und eine Scheitelbewehrung (14) umfasst, zwei Seitenwände (22) und zwei Wülste (24) umfasst, wobei jede Seitenwand (22) den jeweiligen Wulst (24) mit dem Scheitel (12) verbindet, wobei die Scheitelbewehrung (14) sich im Scheitel (12) in einer Umfangsrichtung (Z) des Reifens (10) erstreckt, wobei der Reifen (10) eine radiale Karkassenbewehrung (32) umfasst, die in jedem der Wülste (24) verankert ist und sich in den Seitenwänden (22) erstreckt, wobei die Scheitelbewehrung (14) radial zwischen der Karkassenbewehrung (32; 33) und dem Laufstreifen (20) angeordnet ist, wobei die radiale Karkassenbewehrung (32; 33) eine einzige Karkassenlage (34; 35) umfasst, die mindestens ein Verstärkungselement (44; 45) umfasst, das eine Anordnung umfasst, die aus mehreren Multifilamentfasern besteht, welche umfassen:

• mindestens eine Multifilamentfaser aus aromatischem Polyamid oder aromatischem Copolyamid (46) und
• mindestens eine Multifilamentfaser aus Polyester (48), **dadurch gekennzeichnet, dass** der Reifen (10; 10') eine Seitenwandhöhe, die größer oder gleich 110 mm ist, und einen Tragfähigkeitsindex, der größer oder gleich 100 ist, aufweist.

**2.** Reifen (10; 10') nach dem vorhergehenden Anspruch, wobei die Seitenwandhöhe größer oder gleich 120 mm, vorzugsweise größer oder gleich 130 mm und noch stärker bevorzugt größer oder gleich 140 mm ist.

**3.** Reifen (10; 10') nach einem der vorhergehenden Ansprüche, wobei die Seitenwandhöhe kleiner oder gleich 220 mm, vorzugsweise kleiner oder gleich 210 mm und noch stärker bevorzugt kleiner oder gleich 200 mm ist.

**4.** Reifen (10) nach Anspruch 1, wobei die Seitenwandhöhe 139 bis 223 mm und vorzugsweise 139 bis 200 mm beträgt.

**5.** Reifen (10') nach Anspruch 1, wobei die Seitenwandhöhe kleiner oder gleich 141 mm ist.

**6.** Reifen (10; 10') nach einem der vorhergehenden Ansprüche, wobei der Tragfähigkeitsindex kleiner oder gleich 130, vorzugsweise kleiner oder gleich 125 und stärker bevorzugt kleiner oder gleich 121 ist.

**7.** Reifen (10; 10') nach einem der vorhergehenden Ansprüche, wobei der Nennfülldruck größer oder gleich 200 kPa, vorzugsweise größer oder gleich 220 kPa und stärker bevorzugt größer oder gleich 250 kPa ist.

**8.** Reifen (10; 10') nach einem der vorhergehenden Ansprüche, wobei der Nennfülldruck kleiner oder gleich 600 kPa, vorzugsweise kleiner oder gleich 585 kPa und stärker bevorzugt kleiner oder gleich 575 kPa ist.

**9.** Reifen (10') nach einem der Ansprüche 1 bis 6, wobei der Nennfülldruck 175 kPa bis 425 kPa, vorzugsweise 200 kPa bis 350 kPa und stärker bevorzugt 220 kPa bis 300 kPa beträgt.

**10.** Reifen (10; 10') nach einem der vorhergehenden Ansprüche, welcher ein Aspektverhältnis von 35 bis 95 und vorzugsweise von 40 bis 80 aufweist.

**11.** Reifen (10; 10') nach einem der vorhergehenden Ansprüche, welcher einen Felgennenndurchmesser von 13 bis 22 Zoll und vorzugsweise von 14 bis 21 Zoll aufweist.

**12.** Reifen (10; 10') nach einem der vorhergehenden Ansprüche, wobei das Verstärkungselement (44; 45) eine Anordnung umfasst, die aus zwei Multifilamentfasern besteht.

**13.** Reifen (10; 10') nach dem vorhergehenden Anspruch, wobei die zwei Fasern spiralförmig umeinander gewickelt sind, wobei der Torsionsfaktor K des Verstärkungselements (44; 45) 5,2 bis 6,5 beträgt, wobei K durch die Formel $K = (R \times Ti^{1/2}) / 957$ definiert ist, wobei R die Torsion des Verstärkungselements (44; 45) ist, ausgedrückt in Umdrehungen pro Meter, und Ti die Summe der Titer der Multifilamentfasern des Verstärkungselements (44; 45) in tex ist.

**14.** Verfahren zum Einfahren eines Reifens (10; 10'), **dadurch gekennzeichnet, dass** ein Reifen (10; 10') nach einem der vorhergehenden Ansprüche rollen gelassen wird.

**Claims**

**1.** Tyre (10; 10') comprising a crown (12) comprising a tread (20) and a crown reinforcement (14), two sidewalls (22), two beads (24), with each sidewall (22) connecting each bead (24) to the crown (12), the crown reinforcement (14) extending into the crown (12) in a circumferential direction (Z) of the tyre (10), the tyre (10) comprising a radial carcass reinforcement (32) anchored in each of the beads (24) and extending into the sidewalls (22), the crown reinforcement (14) being radially inserted between the carcass reinforcement (32; 33) and the tread (20), , the radial carcass reinforcement (32; 33) comprises a single carcass ply (34; 35) comprising at least one reinforcer element (44; 45) comprising an assembly formed by a plurality of multifilament strands comprising:

  • at least one multifilament strand (46) made of aromatic polyamide or aromatic co-polyamide; and
  • at least one multifilament strand made of polyester (48), **characterized in that** the tyre (10; 10') having a sidewall height that is greater than or equal to 110 mm and a load index that is greater than or equal to 100.

**2.** Tyre (10; 10') according to the preceding claim, wherein the sidewall height is greater than or equal to 120 mm, preferably greater than or equal to 130 mm, and even more preferably greater than or equal to 140 mm.

**3.** Tyre (10; 10') according to any one of the preceding claims, wherein the sidewall height is less than or equal to 220 mm, preferably less than or equal to 210 mm, and even more preferably less than or equal to 200 mm.

**4.** Tyre (10) according to Claim 1, wherein the sidewall height ranges from 139 to 223 mm, and preferably from 139 to 200 mm.

**5.** Tyre (10') according to Claim 1, wherein the sidewall height is less than or equal to 141 mm.

6. Tyre (10; 10') according to any one of the preceding claims, wherein the load index is less than or equal to 130, preferably less than or equal to 125, and more preferably less than or equal to 121.

7. Tyre (10; 10') according to any one of the preceding claims, wherein the nominal inflation pressure is greater than or equal to 200 kPa, preferably greater than or equal to 220 kPa, and more preferably greater than or equal to 250 kPa.

8. Tyre (10; 10') according to any one of the preceding claims, wherein the nominal inflation pressure is less than or equal to 600 kPa, preferably less than or equal to 585 kPa, and more preferably less than or equal to 575 kPa.

9. Tyre (10') according to any one of Claims 1 to 6, wherein the nominal inflation pressure ranges from 175 kPa to 425 kPa, preferably from 200 kPa to 350 kPa, and more preferably from 220 kPa to 300 kPa.

10. Tyre (10; 10') according to any one of the preceding claims, having an aspect ratio ranging from 35 to 95, and preferably from 40 to 80.

11. Tyre (10; 10') according to any one of the preceding claims, having a nominal rim diameter ranging from 13 to 22 inches, and preferably from 14 to 21 inches.

12. Tyre (10; 10') according to any one of the preceding claims, wherein the reinforcer element (44; 45) comprises an assembly formed by two multifilament strands.

13. Tyre (10; 10') according to the preceding claim, wherein, with the two strands being helically wound around one another, the twist factor K of the reinforcer element (44; 45) ranges from 5.2 to 6.5, with K being defined by the formula $K = (R \times Ti^{1/2}) / 957$, in which R is the twist of the reinforcer element (44; 45) expressed as revolutions per metre and Ti is the sum of the counts of the multifilament strands of the reinforcer element (44; 45) in tex.

14. Method for running-in a tyre (10; 10'), **characterized in that** a tyre (10; 10') according to any one of the preceding claims is run-in.

ER

ER

Z1

Z2                    Z2

# Fig. 1

ER

PI

Z1

Z2                    Z2

PE

# Fig. 2

Fig. 3

Fig. 4a

Fig. 4b

Fig. 5

Fig. 6

Fig. 7

Fig. 8

**EP 3 768 526 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014057082 A1
- EP 3287299 A1
- US 2016193874 A1
- US 2015202924 A1